# FASCICULE DE BREVET EUROPEEN

(11) **EP 4 011 689 B1**
(45) Date de publication et mention de la délivrance du brevet: **03.01.2024**
(21) Numéro de dépôt: 21211280.9
(22) Date de dépôt: 30.11.2021
(51) Int. Cl.: B60N 2/20, B60N 2/30, B60N 2/68

(54) **STRUCTURE PERFECTIONNÉE DE SIÈGE DE VÉHICULE DE LOISIRS A ARMATURE DE DOSSIER RABATTABLE**
VERBESSERTE SITZSTRUKTUR FÜR FREIZEITFAHRZEUGE MIT UMKLAPPBAREM RÜCKENLEHNENRAHMEN
IMPROVED STRUCTURE FOR RECREATIONAL VEHICLE SEAT WITH FRAME FOR FOLDING BACKREST

(30) Priorité: 14.12.2020 FR 2013126; 10.08.2021 FR 2108626
(43) Date de publication de la demande: 15.06.2022
(73) Titulaire: Trigano VDL, 75019 Paris (FR)
(72) Inventeur: PRAT, Isabelle, 26250 Livrons sur drome (FR); DESPESSE, Thierry, 26600 Serves sur Rhône (FR)
(74) Mandataire: Novagraaf Technologies

(56) Documents cités:
- FR-A1- 2 784 337
- US-B1- 6 513 876

## Description

### Domaine technique de l'invention

La présente invention concerne une structure de siège de véhicule de loisirs.

L'invention concerne plus particulièrement une structure de siège comportant une armature de dossier qui est rabattable entre une position angulaire rangée horizontale et une position angulaire verticale d'utilisation du siège.

### Arrière-plan technique

Le document FR-A1-3067302 (TRIGANO VDL) décrit et représente un siège convertible pour véhicule de loisirs, notamment pouvant être utilisé comme siège lors du roulage du véhicule de loisirs et comme partie d'une banquette lorsque le véhicule de loisirs est à l'arrêt. La structure du siège comprend une embase inférieure logée dans un caisson et une armature supérieure qui est montée pivotante sur l'embase inférieure autour d'un axe de pivotement entre une position angulaire relevée (dans laquelle l'armature supérieure constitue une armature de dossier) qui est agencée globalement verticalement et fait saillie hors du caisson, et une position angulaire rabattue dans laquelle l'armature supérieure est agencée globalement horizontalement, à l'intérieur du caisson.

Lorsque le siège convertible est utilisé comme siège de route, la réglementation impose que l'armature de dossier soit immobilisée dans sa position relevée.

A cet effet, de manière connue, l'armature supérieure de dossier du siège est montée pivotante dans les deux sens par rapport à l'embase inférieure, autour d'un axe géométrique transversal horizontal et la structure de siège comporte des moyens de verrouillage automatique de l'armature de dossier dans sa position angulaire relevée et verticale d'utilisation.

Afin de garantir le verrouillage automatique, les solutions connues font appel à des organes de verrouillage qui sont par exemple des leviers ou des crochets articulés de verrouillage qui sont rappelés élastiquement vers leur(s) position(s) de verrouillage, et elles nécessitent des moyens de commande, tels que par exemple une poignée de commande, du déverrouillage. Par exemple, dans le document FR-A1-3067302, le siège convertible comporte un bouton de déverrouillage conçu pour autoriser le pivotement de l'armature supérieure de dossier autour de l'axe de pivotement dans une position angulaire déverrouillée et pour bloquer le pivotement de l'armature supérieure autour de l'axe de pivotement dans une position angulaire verrouillée. Le bouton de déverrouillage est monté pivotant sur l'embase inférieure dans un premier sens de pivotement de la position angulaire déverrouillée à la position angulaire verrouillée et dans un deuxième sens de pivotement opposée de la position angulaire verrouillée à la position angulaire déverrouillée.

Ainsi, pour pouvoir faire pivoter l'armature supérieure de sa position angulaire verticale relevée d'utilisation jusqu'à sa position angulaire rabattue ou l'inverse, l'utilisateur doit d'abord faire tourner le bouton de déverrouillage dans le deuxième sens de pivotement de la position angulaire verrouillée à la position angulaire déverrouillée, afin d'autoriser le pivotement de l'armature supérieure, puis faire pivoter l'armature supérieure. Un organe de rappel élastique est prévu pour rappeler le bouton de déverrouillage en pivotement dans le premier sens de pivotement vers la position angulaire verrouillée. Le bouton de déverrouillage est monté pivotant sur l'armature inférieure à travers le caisson qui loge l'embase inférieure, une ouverture étant prévue à cet effet dans le caisson.

Ces solutions sont complexes, coûteuses et augmentent le poids de la structure de siège. Elles nécessitent de plus d'adapter l'environnement autour de la structure de siège afin de garantir un accès à l'organe de commande des moyens de verrouillage.

Les documents DE7521405U-1 et US6513876B1 proposent des conceptions correspondant à l'état de la technique défini au préambule de la revendication 1.

### Résumé de l'invention

Afin de remédier à ces inconvénients, l'invention propose une structure de siège de véhicule automobile comportant les caractéristiques de la revendication 1.

Ainsi la manoeuvre de l'armature supérieure de dossier et son verrouillage ou son déverrouillage peuvent notamment être réalisés sans agir sur aucun organe, poignée ou levier de verrouillage ou de déverrouillage.

Pour son verrouillage automatique, l'armature supérieure de dossier est libre, sous l'effet de son poids et de la gravité, de descendre verticalement vers le bas par rapport à l'embase inférieure pour atteindre sa position basse verrouillée dans laquelle l'armature supérieure de dossier est en position angulaire relevée d'utilisation et dans laquelle elle est verrouillée. Pour son déverrouillage, il suffit de soulever l'armature supérieure verticalement vers le haut pour l'amener dans sa position verticale haute de déverrouillage à partir de laquelle il est ensuite possible de la faire pivoter vers sa position rabattue.

Selon d'autres caractéristiques de l'invention :
- au voisinage de chacune de ses deux extrémités transversales opposées, l'arbre d'articulation est guidé en translation dans une lumière radiale de guidage appartenant à l'embase, et l'orientation radiale de chaque lumière est parallèle à l'orientation radiale de l'encoche de verrouillage ;
- chaque lumière de guidage est formée dans une plaque de guidage qui est fixe par rapport à l'embase inférieure ;
- la structure présente une symétrie de conception par rapport à un plan vertical médian, et chacune des deux plaques symétriques de verrouillage comporte une lumière de guidage pour constituer chacune une plaque de guidage ;
- l'armature supérieure de dossier comporte deux ailes verticales symétriques de verrouillage dont chacune est adjacente à une plaque de verrouillage associée et porte ledit un doigt transversal horizontal de verrouillage ;
- chaque aile de verrouillage comporte une dite encoche supplémentaire de verrouillage ;
- au moins une plaque de verrouillage comporte une butée angulaire qui est apte à coopérer avec un dit doigt transversal de verrouillage pour déterminer une position angulaire rabattue horizontale de rangement de l'armature supérieure de dossier ;
- au moins une plaque de verrouillage comporte une butée angulaire qui est apte à coopérer avec un dit doigt transversal de verrouillage pour déterminer une position angulaire relevée d'utilisation de l'armature supérieure de dossier
- la structure de siège comporte au moins un pion transversal commandé de blocage de sécurité de l'armature supérieure de dossier dans sa position angulaire relevée d'utilisation du siège et basse verrouillée, et ledit pion de blocage de sécurité est porté par l'armature supérieure de dossier et est monté mobile axialement entre une position escamotée et une position active vers laquelle il est rappelé élastiquement et dans laquelle il est reçu axialement dans un orifice agencé en vis-à-vis de l'embase ;
- la structure de siège comporte une poignée associée à l'armature supérieure de dossier permettant d'appliquer audit pion de blocage de sécurité un effort de commande de son déplacement depuis sa position active vers sa position escamotée, et d'appliquer simultanément à l'armature supérieure de dossier un effort de déverrouillage, depuis sa position basse verrouillée vers sa position haute ;
- la structure de siège comporte des moyens visuels de repérage de la position angulaire relevée d'utilisation de l'armature supérieure de dossier par rapport à l'embase.

### Brève descriptions des figures

D'autres caractéristiques et avantages de l'invention apparaitront au cours de la lecture de la description détaillée qui va suivre pour la compréhension de laquelle on se reportera aux dessins annexés dans lesquels :
[Fig.1] - la figure 1 est une vue en perspective d'un exemple de réalisation d'une structure de siège convertible selon l'invention sur laquelle l'armature supérieure de dossier est représentée dans sa position angulaire relevée d'utilisation ;
[Fig.2] - la figure 2 est une vue en perspective éclatée de l'embase inférieure et de l'armature de dossier de la structure de siège de la figure 1 ;
[Fig.3] - la figure 3 est une vue partielle de détail en perspective des moyens d'articulation et de verrouillage équipant la partie latérale de droite de la structure de siège de la figure 1 ; [Fig.4] - la figure 4 est une vue en perspective selon un autre angle des éléments représentés à la figure 4 ;
[Fig.5] - la figure 5 est une en perspective de détail de la plaque de verrouillage et de guidage de droite portée par l'embase inférieure ;
[Fig.6] - la figure 6 est une vue en perspective de détail de l'aile de verrouillage de droite l'armature de dossier ;
[Fig.7] - la figure 7 est une vue en perspective de l'embase inférieure et de l'armature de dossier de la structure de siège de la figure 2 sur laquelle l'armature de dossier est représentée dans sa position angulaire rabattue horizontale de rangement ;
[Fig.8] - la figure 8 est une vue partielle en section selon la ligne 8-8 de la figure 9C ; [Fig.9A] - la figure 9A est une vue latérale de gauche de détail des moyens d'articulation et de verrouillage équipant la partie latérale de gauche de la structure de siège de la figure 1, sur laquelle l'armature de dossier est représentée dans une position angulaire décalée par rapport à sa position angulaire relevée d'utilisation ;
[Fig.9B] - la figure 9B est une vue analogue à celle de la figure 9A sur laquelle l'armature supérieure de dossier est dans sa position angulaire relevée et haute, dite de verrouillage, avant d'être verrouillée dans cette position ;
[Fig.9C] - la figure 9C est une vue analogue à celle de la figure 9B sur laquelle l'armature supérieure de dossier est dans sa position angulaire relevée et basse, dite position verrouillée ;
[Fig.10] - la figure 10 est une vue de face d'un autre exemple de réalisation d'une structure de siège convertible selon l'invention analogue à celui représenté aux figures précédentes, sur laquelle l'armature supérieure de dossier est représentée dans sa position angulaire relevée d'utilisation, sans ses équipements tels que la ceinture de sécurité et l'appui-tête mais avec des moyens complémentaires de blocage de sécurité ;
[Fig.11] - la figure 11 est une vue partielle en coupe par rapport au un plan vertical et longitudinal médian PVLM de la partie centrale de la structure de siège représentée à la figure 10
[Fig.12] - la figure 12 est une vue de détail de l'un des deux organes de blocage de sécurité, appartenant aux moyens complémentaires de blocage de sécurité de la structure de siège représentée à la figure 10, qui est représenté en coupe par un plan horizontal.

### Description détaillée de l'invention

Pour la description de l'invention et la compréhension des revendications, on adoptera en référence à la gravité terrestre les orientations verticale, longitudinale et transversale selon le repère V, L, T indiqué aux figures dont les axes longitudinal L et transversal T s'étendent dans un plan horizontal.

Par convention, l'axe longitudinal L est orienté de l'arrière vers l'avant, l'axe transversal Test orienté de la gauche vers la droite, et l'axe vertical V est orienté de bas en haut.

Dans la description qui va suivre, des éléments identiques, similaires ou analogues seront désignés par les mêmes chiffres de référence.

### Exemple de réalisation de l'invention

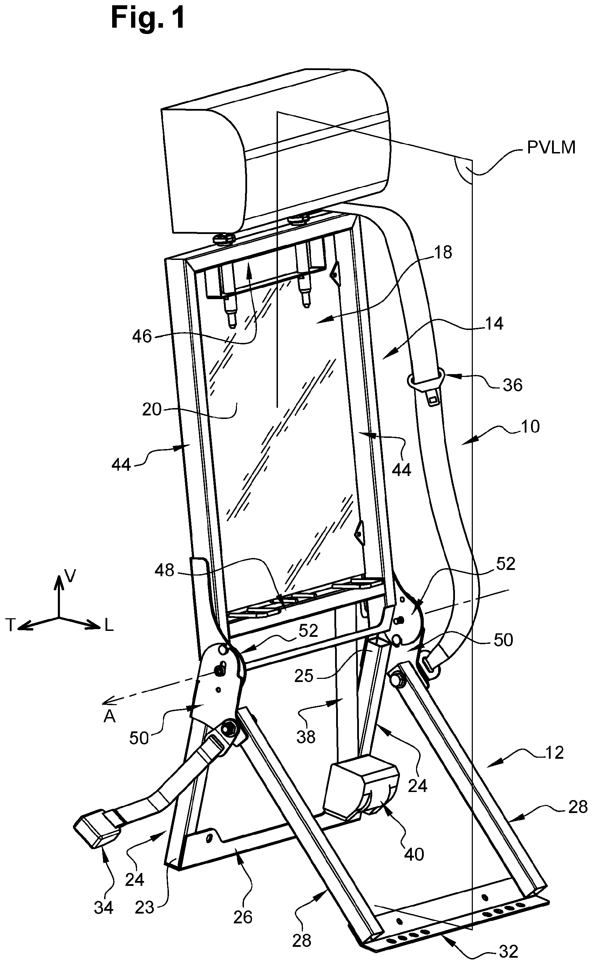

Dans l'exemple de réalisation illustré aux figures, à l'exception de l'ensemble de ceinture de sécurité, la structure de siège 10 présente une symétrie de conception par rapport au un plan vertical et longitudinal médian PVLM indiqué à la figure 1.

Tous les composants et éléments symétriques constitutifs de l'armature de siège 10 seront désignés par les mêmes chiffres de référence.

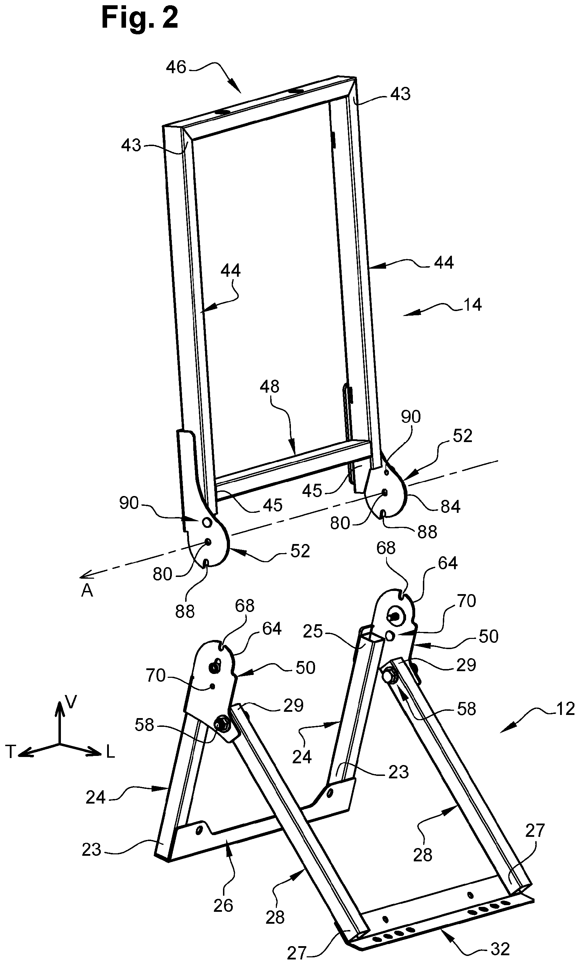

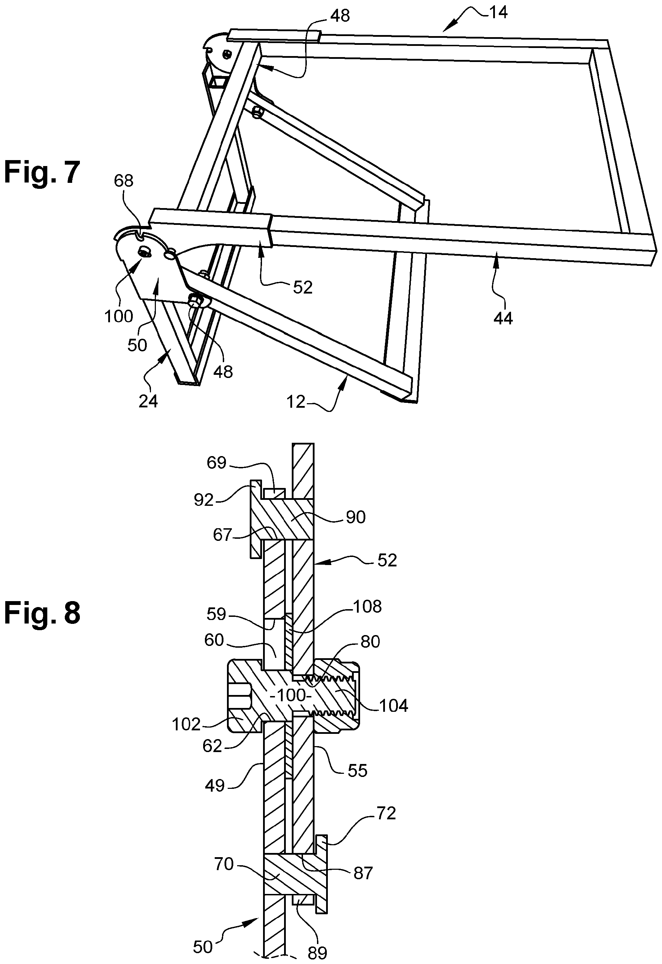

La structure de siège 10 comprend une partie inférieure, dite embase inférieure 12, et une partie supérieure, dite armature supérieure de 14 dossier, qui est montée pivotante dans les deux sens sur l'embase inférieure 12 autour d'un axe géométrique transversal et horizontal A de pivotement entre une position angulaire d'utilisation, aussi appelée position relevée, illustrée aux figures 1 et 2, et une position angulaire de rangement, aussi appelée position rabattue (figure 7).

La structure de siège 10 est montrée à la figure 2 sans ses équipements tels que la ceinture de sécurité et l'appui-tête.

L'armature supérieure 14 de dossier comprend ici une plaque centrale 18 dont une face avant plane 20 est agencée dans un plan transversal.

La face avant 20 est agencée globalement verticalement, lorsque l'armature supérieure de dossier 14 est en position angulaire relevée d'utilisation, de sorte à permettre la réalisation d'un dossier de siège, par exemple en y appuyant et an y fixant un coussin amovible de dossier (Non représenté).

On entend par « globalement verticalement » le fait que la face avant 20 de la plaque centrale 18 l'armature supérieure de dossier 14 est agencée verticalement, à 30 degrés d'angle près autour de l'axe A, un dossier de siège légèrement incliné par rapport à la verticale pouvant être plus confortable pour un passager utilisateur.

La face avant 20 de la plaque centrale 18 l'armature supérieure de dossier 14 peut encore être agencée horizontalement, vers le bas, lorsque l'armature supérieure de dossier 14 est en position angulaire rabattue de rangement.

La plaque centrale 18 comprend aussi une face arrière plane 22, opposée à la face avant 20, qui est agencée horizontalement et orientée vers le haut, lorsque l'armature supérieure de dossier 14 est en position angulaire rabattue de rangement, de sorte par exemple à former une assise de banquette en y faisant reposer et en y fixant au moins partiellement, un coussin d'assise (Non représenté).

L'embase inférieure 12 comprend ici à titre d'exemple exemple une paire de pieds arrière 24 et une paire de pieds avant 28.

Les pieds arrière 24 s'étendent verticalement et perpendiculairement par rapport à l'axe A de pivotement de l'armature supérieure de dossier 14, chacun entre une extrémité inférieure 23 apte à être en appui sur le plancher (Non représenté) d'un véhicule de loisirs (Automobile ou tracté) et une extrémité supérieure 25. A proximité des extrémités supérieures 25, l'armature supérieure de dossier 14 est montée pivotante autour de l'axe géométrique de pivotement A. Les pieds arrière 24 sont par exemple reliés l'un à l'autre, au niveau de leurs extrémités

inférieures 23, par l'intermédiaire d'une traverse 26.

Les pieds avant 28 s'étendent parallèlement l'un par rapport à l'autre et orthogonalement par rapport à l'axe A, entre une extrémité inférieure 27 apte à être en appui sur le plancher du véhicule de loisirs et une extrémité supérieure 29 par laquelle chacun est relié à l'extrémité supérieure 23 d'un pied arrière 24 situé du même côté.

En outre, les pieds avant 28 sont inclinés par rapport à la direction verticale V, et ils sont reliés l'un à l'autre, au niveau de leurs extrémités inférieures 27, par l'intermédiaire d'une traverse 32.

Comme illustré à la figure 1, la structure de siège 10 peut comporter un système de ceinture de sécurité.

Le système de ceinture de sécurité comprend par exemple un boîtier 34 comprenant un mécanisme de verrouillage (non représenté) et un pêne 36 conçu pour s'engager dans le mécanisme de verrouillage du boîtier 34. Le boîtier 34 peut en outre comprendre un organe de déverrouillage conçu pour libérer le pêne 36 du mécanisme de verrouillage, lorsqu'un utilisateur agit dessus. Le boîtier 34 est fixé sur l'embase inférieure 12, du côté droit du plan vertical PVLM, ici sur l'extrémité supérieure du pied de droite de la paire de pieds avant 28. Le boîtier 34 est par exemple relié à l'embase inférieure 12 par l'intermédiaire d'une portion de sangle qui est assemblée à l'embase inférieure 12.

Le système de ceinture de sécurité comprend encore une sangle 38 sur laquelle le pêne 36 est monté coulissant.

Une première extrémité de la sangle 38 est par exemple fixée sur l'extrémité supérieure du pied avant gauche 28. Le système de ceinture de sécurité comprend un enrouleur 40 par l'intermédiaire duquel l'autre extrémité de la sangle 38 est montée sur l'embase inférieure 12, cette autre extrémité de la sangle 38 étant enroulée autour de l'enrouleur 40. Enfin, le système de ceinture de sécurité comporte un guide de sangle monté en haut à gauche de l'armature supérieure de dossier 14 et recevant la sangle 38 en coulissement.

Ainsi, lorsque le véhicule de loisirs roule, le système de ceinture de sécurité permet d'assurer la sécurité de l'utilisateur assis dans le siège convertible en configuration de siège de route.

L'armature de dossier supérieure 14 est représentée « nue » à la figure 2, notamment sans sa plaque verticale 18.

L'armature supérieure de dossier 14 est ici réalisée sous la forme d'un cadre rectangulaire constitué de deux montants latéraux verticaux 44 qui sont reliés entre eux par une traverse horizontale supérieure 46 qui relie entre elles les deux extrémités supérieures 45 des deux montants latéraux 44, et par une traverse horizontale inférieure 48 qui relie entre eux les deux tronçons 45 d'extrémité inférieure des deux montants latéraux 44.

Les moyens d'articulation et de verrouillage de l'armature supérieure 14 par rapport à l'embase inférieure 12 sont essentiellement constitués par deux plaques latérales verticales de verrouillage et de guidage 50 qui sont fixées à la partie supérieure de l'embase inférieure 12, et par deux ailes latérales verticales de verrouillage 52 qui sont fixées à la partie inférieure de l'armature supérieure de dossier 14.

Chaque plaque de verrouillage 50 comporte une patte arrière de fixation 54 qui est repliée transversalement à angle droit et à partir de laquelle elle s'étend dans un plan vertical et longitudinal.

La patte de fixation 54 permet notamment la fixation par soudage de la plaque de verrouillage 50 sur le tronçon d'extrémité supérieure 25 d'un pied arrière associé 24 de l'embase inférieure 12.

A son extrémité inférieure avant, chaque plaque de verrouillage 50 comporte un trou 56 pour la fixation par un boulon 58 de l'extrémité supérieure 29 d'un pied avant associé 28.

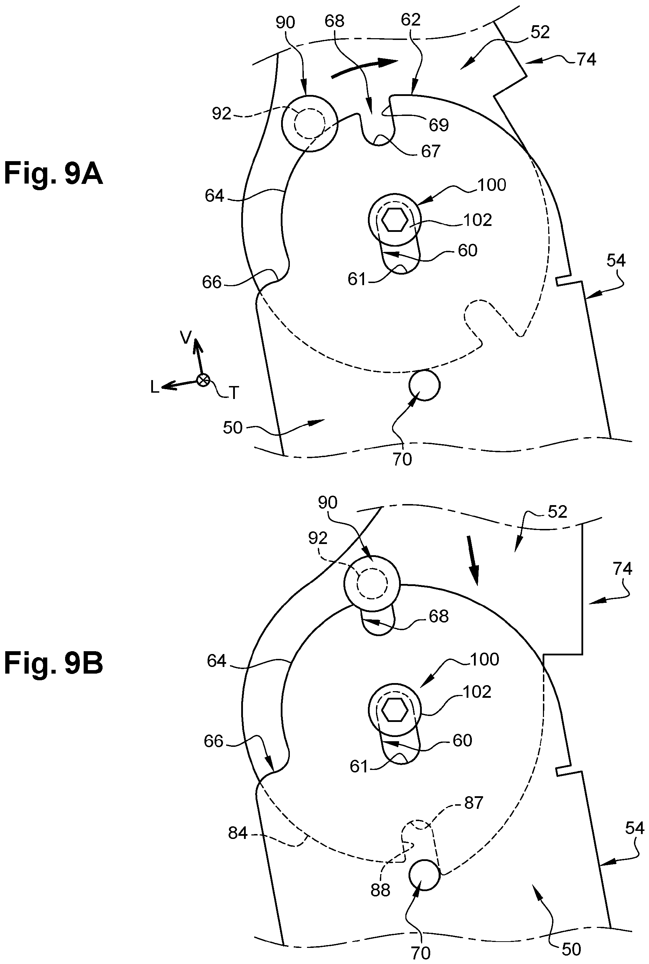

Dans sa partie centrale, chaque plaque de verrouillage 50 comporte une lumière rectiligne de guidage 60 qui est d'orientation verticale et qui est délimitée verticalement par deux bords opposés, en arc de cercle, d'extrémité supérieure 59 et d'extrémité inférieure 61 (Voir figures 9A à 9B).

A sa partie supérieure, chaque plaque de verrouillage 50 est délimitée par un bord supérieur 62 de contour globalement semi circulaire qui comporte un tronçon fonctionnel avant 64 de guidage en pivotement dont le contour est en arc de cercle centré autour du bord d'extrémité supérieure 59 de la lumière 60.

Le tronçon fonctionnel 64 est délimité angulairement par un bord radial inférieur horizontal de butée 66.

A son extrémité supérieure, le tronçon fonctionnel 64 comporte une encoche supérieure radiale rectiligne 68 de verrouillage qui est ouverte verticalement vers le haut.

L'encoche supérieure 68 de verrouillage est alignée avec la lumière de guidage 60 et elle est délimitée verticalement vers le bas par un bord inférieur en arc de cercle 67.

Le côté vertical arrière 69 de l'encoche supérieure de verrouillage 68 se prolonge vers le haut pour délimiter angulairement le tronçon fonctionnel 64 et constituer un bord radial supérieur vertical de butée

La conception de chaque plaque latérale de verrouillage 62 avec son encoche de verrouillage 68 et sa lumière de guidage 60 remplit le double rôle de plaque de verrouillage et de plaque de guidage au sens de l'invention.

Verticalement en dessous de la lumière de guidage 60, la plaque de verrouillage 50 porte un doigt inférieur de verrouillage 70 qui s'étend horizontalement et transversalement vers l'intérieur à partir de la face interne 51 de la plaque de verrouillage 50.

Le doigt inférieur de verrouillage 70 comporte une tête élargie 72 d'extrémité libre.

Chaque aile de verrouillage 52 comporte une patte arrière de fixation 74 qui est repliée transversalement à angle droit et à partir de laquelle elle s'étend dans un plan vertical et longitudinal.

La patte de fixation 74 permet notamment la fixation par soudage de l'aile de verrouillage 52 sur le tronçon d'extrémité inférieure 45 d'un montant latéral associé 44 de l'armature supérieure de dossier 14.

Dans sa partie centrale, chaque aile de verrouillage 52 comporte un trou 80.

A sa partie inférieure, chaque aile de verrouillage 52 est délimitée par un bord inférieur 82 de contour globalement semi circulaire qui comporte un tronçon fonctionnel avant 84 de guidage en pivotement dont le contour est en arc de cercle centré autour du trou central 80. A son extrémité inférieure, le tronçon fonctionnel 84 comporte une encoche inférieure radiale rectiligne 88 de verrouillage qui est ouverte verticalement vers le bas.

L'encoche inférieure 88 de verrouillage est alignée avec le trou central 80 et elle est délimitée verticalement vers le bas par un bord inférieur en arc de cercle 87.

Le côté vertical arrière 89 de l'encoche inférieure de verrouillage 88 se prolonge vers le bas pour délimiter angulairement le tronçon fonctionnel 84 et constituer un bord radial inférieur vertical de butée.

Verticalement au-dessus du trou central 80 et diamétralement à l'opposé de l'encoche inférieure de verrouillage 88, l'aile de verrouillage 52 porte un doigt supérieur de verrouillage 90 qui s'étend horizontalement et transversalement vers l'extérieur à partir de la face externe 53 de l'aile de verrouillage 52.

Le doigt supérieur de verrouillage 90 comporte une tête élargie 92 d'extrémité libre.

Au sens de l'invention, l'armature supérieure de dossier 14 est montée articulée sur l'embase inférieure 12 au moyen d'un arbre d'articulation qui est monté à rotation par rapport à l'embase inférieure 12.

A cet effet, de chaque côté, l'ensemble comporte un demi-arbre 100 dont la tête 102 est en appui glissant contre la portion en vis-à-vis de la face externe 49 de la plaque de verrouillage 50, autour de la lumière de guidage 60, et dont le corps lisse s'étend à travers la lumière de guidage 60, puis se termine par un tronçon fileté 104 qui reçoit un écrou complémentaire 106 qui est en appui glissant contre la portion en vis-à-vis de la face interne 55 de l'aile de verrouillage 52, autour du trou central 80.

Une rondelle lisse 108, traversée par le corps lisse du demi-arbre 100, peut être interposée axialement entre la face interne 51 de la plaque de verrouillage 50 et la face externe 55 de l'aile de verrouillage associé 52.

Ainsi, dans l'exemple de réalisation illustré aux figures, la partie inférieure de l'armature supérieure de dossier 14 porte les deux demi-arbres 100 qui sont fixes et dont chacun est reçu à coulissement vertical, pratiquement sans jeu, dans une lumière verticale de guidage 60 d'une plaque de verrouillage associée 50.

Ainsi, hormis lorsque l'armature supérieure de dossier 14 est verrouillée dans sa position angulaire relevée d'utilisation, l'armature supérieure de dossier 14 est libre de pivoter dans les deux sens - ici sur environ un quart de tour - autour de l'axe géométrique de pivotement A.

Lorsque les doigts de verrouillage 70 et 90 sont reçus dans les encoches de verrouillage correspondantes 68 et 88 respectivement, ceux-ci peuvent coulisser verticalement dans les deux sens et, simultanément, chaque deux demi-arbre 100 peut coulisser verticalement, pratiquement sans jeu et dans les deux sens, dans la lumière verticale de guidage 60 d'une plaque de verrouillage associée 50. Ainsi, l'armature supérieure de dossier 14 avec son arbre inférieur d'articulation en deux parties 100 peut se déplacer verticalement dans les deux sens en étant guidée dans ces courses de déplacement vertical par rapport à l'embase inférieure fixe 12.

### Description du fonctionnement

On décrira maintenant le fonctionnement en référence aux figures 9A à 9C.

A la figure 9A, l'armature supérieure de dossier 14 est dans une position angulaire intermédiaire entre ses deux positions angulaires extrêmes rabattue et relevée.

Dans cette position angulaire, chaque demi-arbre 100 est en appui verticalement vers le

haut contre le bord supérieur 59 de la lumière associée 60, et chaque doigt supérieur 90 de verrouillage est en contact glissant avec le tronçon fonctionnel 64 du bord supérieur 62 de la plaque de verrouillage et de guidage 50, en étant située angulairement entre les deux bords de butée 66 et 69.

De même, chaque doigt inférieur 70 de verrouillage est en contact glissant avec le tronçon fonctionnel 84 du bord inférieur 82 de l'aile de verrouillage 52.

A partir de la position angulaire intermédiaire illustrée à la figure 9A, en faisant pivoter l'armature supérieure de dossier 14 autour de l'axe A dans le sens horaire, on atteint la position angulaire illustrée à la figure 9B - dite position de verrouillage - dans laquelle chaque doigt supérieur 90 de verrouillage est en butée contre un bord de butée 69 et est situé en regard de l'extrémité supérieure ouverte d'une encoche de verrouillage 68, en étant situé à l'extérieur de cette dernière.

Dans cette même position, chaque doigt inférieur 70 de verrouillage est en butée contre un bord de butée 89 et est situé en regard de l'extrémité inférieure ouverte d'une encoche de verrouillage 88, en étant situé à l'extérieur de cette dernière.

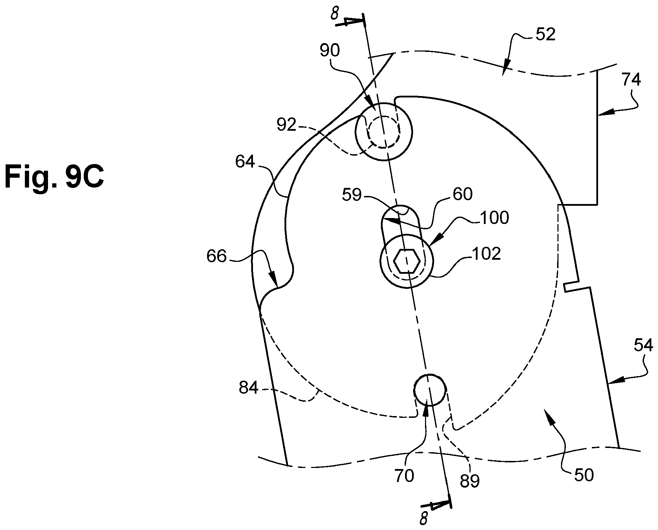

Dans cette position angulaire, l'armature supérieure de dossier 14 n'est plus retenue verticalement par les doigts de verrouillage 70 et 90 et l'armature supérieure de dossier 14 est libre, sous l'effet de la gravité, de descendre verticalement vers le bas par rapport à l'embase inférieure 12 pour atteindre la position illustrée à la figure 9C et à la figure 8 - dite position verrouillée - dans laquelle l'armature supérieure de dossier 14 est en position verticale relevée d'utilisation et dans laquelle l'armature supérieure est verrouillée.

Lors du mouvement de descente de l'armature supérieure de dossier 14, chaque demi-arbre 100 se déplace verticalement vers le bas dans la lumière de guidage 60 associée pour venir en butée contre le bord inférieur 61.

En partant de la position verrouillée illustrée à la figure 9C, pour déverrouiller l'armature supérieure de dossier 14, il suffit de la soulever verticalement jusqu'à l'amener à nouveau dans sa position verticale et angulaire illustrée à la figure 9B - qui est alors une position de déverrouillage - à partir de laquelle il est ensuite possible de la faire pivoter autour de l'axe A dans le sens antihoraire.

Cette course angulaire se poursuit jusqu'à atteindre la position angulaire rabattue de rangement de l'armature supérieure de dossier 14 illustrée à la figure 7 dans laquelle chaque doigt de verrouillage 70, 90 est en appui contre un bord radial de butée associé 89, 69 respectivement.

### Autre exemple de réalisation

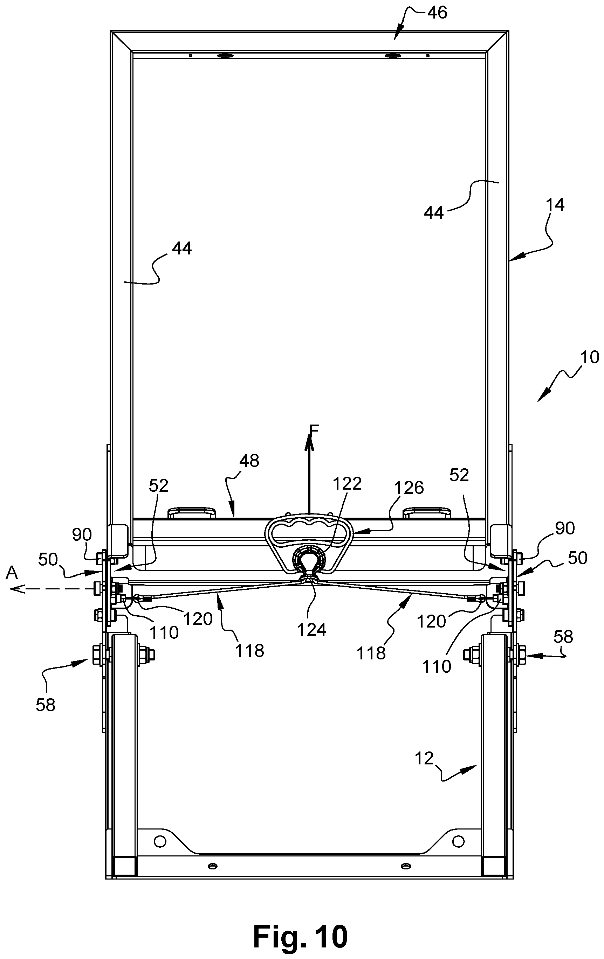

On décrira maintenant l'autre exemple de réalisation représenté partiellement aux figures 10 à 12.

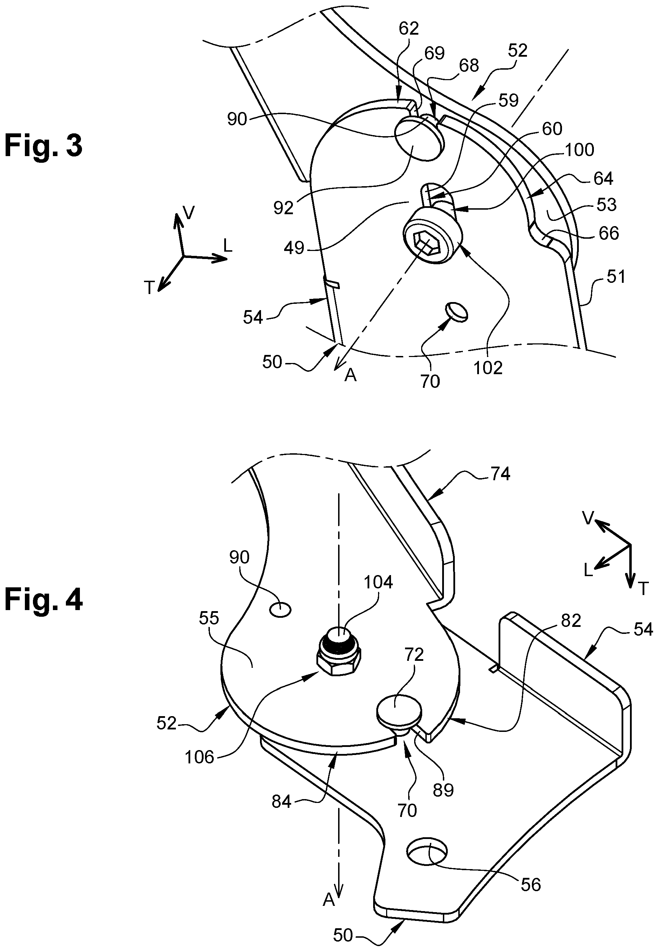

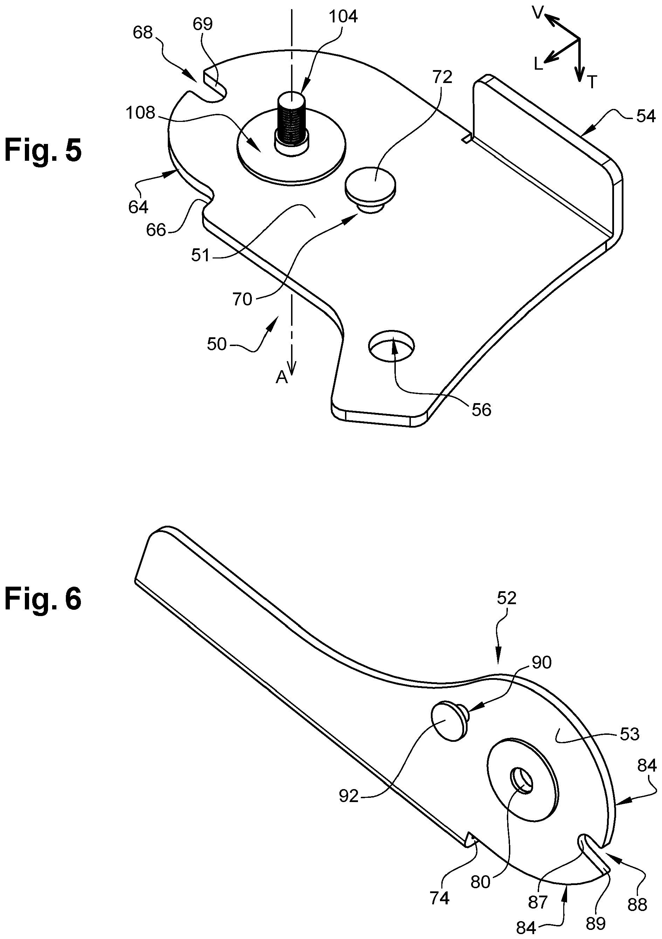

Sur ces figures, des éléments et composants identiques, analogues ou similaires à ceux décrits en référence aux figures 1 à 9C sont désignés par les mêmes références.

La structure de siège convertible1 0 comporte des moyens complémentaires de blocage de sécurité qui sont ici constitués par deux pions 110 de blocage de sécurité.

Chaque pion 110 de blocage de sécurité est un pion transversal qui s'étend axialement selon une direction horizontale et qui est ici porté par une aile associée de verrouillage 52 sur laquelle il est monté vissé par une entretoise 112 formant écrou qui est portée par l'aile de verrouillage 52.

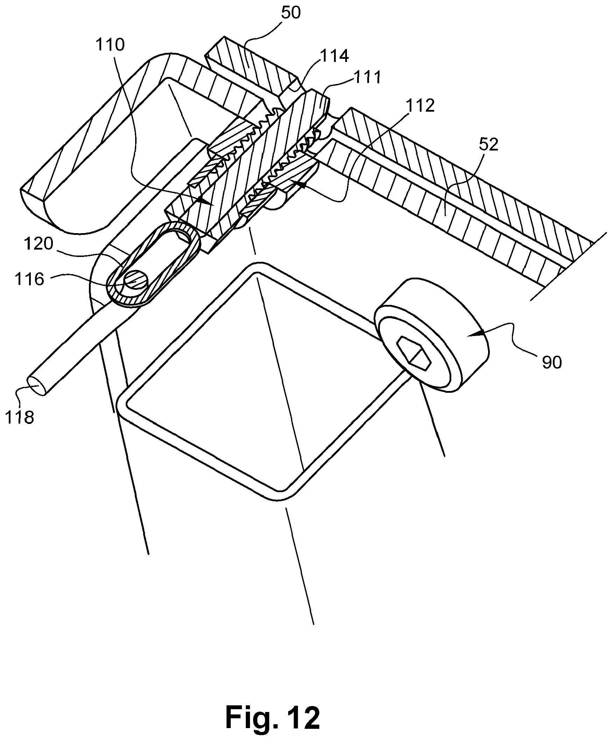

Chaque pion 110 de blocage de sécurité est monté coulissant axialement entre une position escamotée et une position active, représentée à la figure 12, vers laquelle il est rappelé élastiquement (par des moyens non représentés en détail) et dans laquelle son extrémité libre distale 111 est reçue axialement dans un orifice 114 agencé en vis-à-vis dans la plaque de verrouillage 50 associée portée par l'embase 12.

Pour commander le déplacement axial d'escamotage du pion de blocage 110, ce dernier comporte, à son extrémité proximale, un anneau de traction 116.

Pour agir sur l'anneau de traction 116, les moyens complémentaires de blocage de sécurité comportent un câble de commande 118 dont l'extrémité transversale distale 120 est accrochée à l'anneau de traction 116.

Ainsi, dans l'agencement symétrique selon l'invention, chacune des deux extrémités transversales distales 120 est accrochée à un anneau de traction associé 116.

Dans sa partie médiane, le câble de commande 118 comporte une boucle centrale 122 qui passe à travers un cavalier de guidage 124 qui est fixé à la traverse horizontale inférieure 48.

La boucle centrale 122 est solidaire d'une poignée centrale de manipulation et de traction 126 dont la partie supérieure comporte un logement 128 permettant à un utilisateur de la prendre en main pour lui appliquer un effort de traction « F », du bas vers le haut.

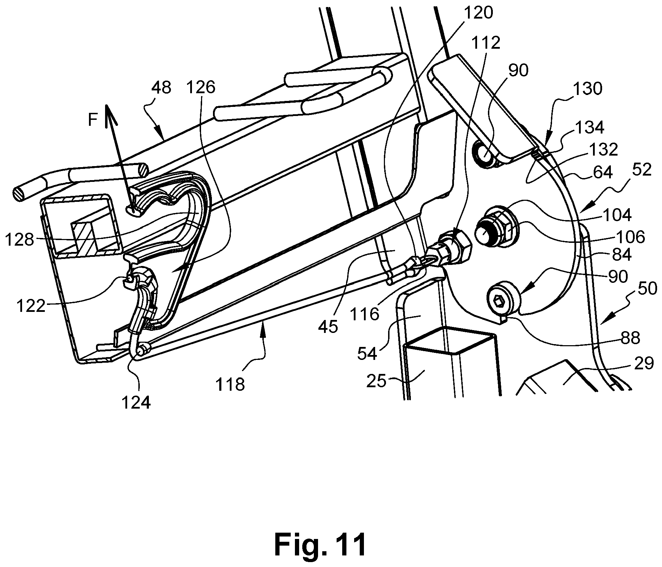

La poignée centrale 126 permet à l'utilisateur, par une seule action selon la flèche « F » des figures 10 et 11 :
- d'appliquer simultanément aux pions de blocage de sécurité 110 un effort de commande de leurs déplacements, chacun depuis sa position active vers sa position escamotée ;
- et d'appliquer simultanément à l'armature supérieure 14 de dossier un effort de déverrouillage, permettant de la déplacer verticalement depuis sa position basse verrouillée vers sa position haute de déverrouillage.

Comme on peut le voir à la figure 12, la structure de siège 10 comporte des moyens 130 de repérage visuel de la position angulaire relevée d'utilisation de l'armature supérieure 14 de dossier par rapport à l'embase.

A titre d'exemple non limitatif, ces moyens 130 comporte ici un premier repère coloré 132 formé sur le bord de l'aile de verrouillage et un second repère coloré 134 formé sur le bord de la plaque de verrouillage adjacente 50.

Comme illustré à la figure 12, lorsque les deux repères 132 et 134, la structure de dossier 14 est dans sa position angulaire d'utilisation.

### Variantes

L'invention n'est pas limitée à la conception représentée, et peut comporter seulement deux couples constitués d'une encoche de verrouillage supérieure 68 et d'un doigt inférieur de verrouillage associé 90.

A titre non limitatif, il est possible de prévoir des organes élastiques complémentaires qui sollicitent élastiquement les ailes de verrouillage 52 vers le bas par rapport aux plaques de verrouillage 50 lorsque l'armature supérieure de dossier 14 est dans sa position verrouillée. Les doigts 70 et 90 sont représentés aux figures sous la forme d'éléments soudés sur les plaques associées. En variante chaque doigt de verrouillage peut être réalisé sous la forme d'une vis ou d'un boulon épaulé.

L'invention n'est pas limitée aux cas illustré avec une seule position angulaire relevée d'utilisation de l'armature de dossier 14. En effet, un dossier de siège légèrement incliné par rapport à la verticale pouvant être plus confortable pour un passager utilisateur, il est possible de prévoir par exemple deux encoches inférieures de verrouillage légèrement décalées angulairement l'une par à l'autre et dans chacune desquelles le doigt de verrouillage peut être reçu.

Les moyens optionnels complémentaires de blocage de sécurité et de repérage visuel peuvent n'être prévus que d'un seul côté.

## Revendications

1. Structure (10) de siège de véhicule automobile comportant :
- une embase (12) inférieure de fixation de la structure sur une partie d'un véhicule automobile ;
- une armature supérieure de dossier (14) du siège qui est montée pivotante dans les deux sens par rapport à l'embase (12) inférieure, autour d'un axe géométrique (A) transversal horizontal entre :
* une position angulaire relevée d'utilisation du siège dans laquelle l'armature supérieure (14) de dossier s'étend verticalement vers le haut ;
* et une position angulaire rabattue de rangement du siège qui est décalée angulairement par rapport à la position angulaire relevée d'utilisation ;
- et des moyens de verrouillage automatique de l'armature supérieure (14) de dossier dans sa position angulaire relevée d'utilisation,
dans laquelle les moyens de verrouillage automatique comportent :
- au moins une plaque (50) verticale de verrouillage qui est fixe par rapport à l'embase (12) inférieure et qui comporte une encoche (68) radiale de verrouillage qui est ouverte verticalement vers le haut, en référence à la gravité terrestre ;
- un doigt (90) transversal horizontal de verrouillage qui est porté par l'armature supérieure (14) de dossier qui l'entraîne en pivotement entre :
* une première position associée à la position angulaire relevée d'utilisation du siège et dans laquelle le doigt (90) de verrouillage est positionné angulairement en regard de l'extrémité ouverte de l'encoche (68) de verrouillage ou bien est engagé dans l'encoche (68) de verrouillage pour immobiliser angulairement l'armature supérieure (14) de dossier par rapport à l'embase (12) inférieure ;
* et une série d'autres positions, décalées angulairement par rapport à ladite première position angulaire,
et dans laquelle l'armature supérieure (14) de dossier est montée articulée sur l'embase (12) inférieure au moyen d'un arbre (100) d'articulation qui est monté à rotation par rapport à l'embase (12) inférieure et qui, lorsque l'armature supérieure (14) de dossier est dans sa position angulaire relevée d'utilisation, est mobile en translation dans les deux sens par rapport à l'embase (12) inférieure pour pouvoir occuper :
** une position haute dans laquelle le doigt (90) de verrouillage est positionné angulairement en regard de l'extrémité ouverte de l'encoche (68) de verrouillage ;
** et une position basse verrouillée dans laquelle le doigt (90) de verrouillage est engagé dans l'encoche (68) de verrouillage,
**caractérisée en ce que** :
- au moins une plaque (50) de verrouillage porte un doigt (70) supplémentaire transversal horizontal de verrouillage ;
- l'armature supérieure (14) de dossier comporte une encoche (88) supplémentaire radiale de verrouillage qui est ouverte verticalement vers le bas, en référence à la gravité terrestre, qui est entraînée en pivotement par l'armature supérieure (14) de dossier entre :
* une première position angulaire associée à la position angulaire relevée d'utilisation du siège et dans laquelle l'extrémité ouverte de l'encoche (88) supplémentaire de verrouillage est positionnée angulairement en regard du doigt (70) supplémentaire de verrouillage ou bien dans laquelle le doigt (70) supplémentaire de verrouillage est engagé dans l'encoche (88) supplémentaire de verrouillage ;
* et une série d'autres positions, décalées angulairement par rapport à ladite première position angulaire.

2. Structure (10) de siège selon la revendication 1, **caractérisée en ce que**, au voisinage de chacune de ses deux extrémités transversales opposées, l'arbre (100) d'articulation est guidé en translation dans une lumière (60) radiale de guidage appartenant à l'embase (12) inférieure, et **en ce que** l'orientation radiale de chaque lumière (60) est parallèle à l'orientation radiale de l'encoche (68) de verrouillage.

3. Structure (10) de siège selon la revendication 2, **caractérisée en ce que** chaque lumière (60) de guidage est formée dans une plaque (50) de guidage qui est fixe par rapport à l'embase (12) inférieure.

4. Structure (10) de siège selon la revendication 3, **caractérisée en ce qu'**elle présente une symétrie de conception par rapport à un plan vertical médian (PVLM), et **en ce que** chacune des deux plaques (50) symétriques de verrouillage comporte une lumière (60) de guidage pour constituer chacune une plaque (50) de guidage.

5. Structure (10) de siège selon la revendication 4, **caractérisée en ce que** l'armature supérieure (14) de dossier comporte deux ailes (52) verticales symétriques de verrouillage dont chacune est adjacente à une plaque (50) de verrouillage associée et porte ledit un doigt (70) transversal horizontal de verrouillage.

6. Structure (10) de siège selon la revendication 5, **caractérisée en ce que** chaque aile (52) de verrouillage comporte une dite encoche supplémentaire (88) de verrouillage.

7. Structure (10) de siège selon l'une quelconque des revendications 4 à 6, **caractérisé en ce que** au moins une plaque (50) de verrouillage comporte une butée angulaire (66) qui est apte à coopérer avec un dit doigt (70) transversal de verrouillage pour déterminer une position angulaire rabattue horizontale de rangement de l'armature supérieure (14) de dossier.

8. Structure (10) de siège selon l'une quelconque des revendications 4 à 7, **caractérisé en ce que** au moins une plaque de verrouillage (50) comporte une butée angulaire (69) qui est apte à coopérer avec un dit doigt (70) transversal de verrouillage pour déterminer une position angulaire relevée d'utilisation de l'armature supérieure (14) de dossier.

9. Structure (10) de siège selon l'une quelconque des revendications précédentes, **caractérisée en ce qu'**elle comporte au moins un pion transversal commandé (110, 111) de blocage de sécurité de l'armature supérieure (14) de dossier dans sa position angulaire relevée d'utilisation du siège et basse verrouillée, et **en ce que** ledit pion de blocage de sécurité (110, 111) est porté par l'armature supérieure (14) de dossier et est monté mobile axialement entre une position escamotée et une position active vers laquelle il est rappelé élastiquement et dans laquelle il est reçu axialement dans un orifice (114) agencé en vis-à-vis de l'embase (12).

10. Structure (10) de siège selon la revendication 9, **caractérisée en ce qu'**elle comporte une poignée (126) associée à l'armature supérieure (14) de dossier permettant :
- d'appliquer audit pion de blocage de sécurité (110, 111) un effort de commande de son déplacement depuis sa position active vers sa position escamotée ;
- et d'appliquer simultanément à l'armature supérieure (14) de dossier un effort (F) de déverrouillage, depuis sa position basse verrouillée vers sa position haute.

11. Structure (10) selon la revendication 10, **caractérisée en ce que** la partie supérieure de ladite poignée (126) comporte un logement (128) permettant à un utilisateur de lui appliquer un effort de traction (F), du bas vers le haut. et, par une seule action d'appliquer simultanément audit pion de blocage de sécurité (110 )un effort de commande de son déplacement, depuis sa position active vers sa position escamotée, et d'appliquer simultanément à l'armature supérieure (14) de dossier un effort de déverrouillage, permettant de la déplacer verticalement, en référence à la gravité terrestre, depuis sa position basse verrouillée vers sa position haute de déverrouillage.

12. Structure (10) de siège selon l'une quelconque des revendications précédentes, **caractérisée en ce qu'**elle comporte des moyens (130) de repérage visuel de la position angulaire relevée d'utilisation de l'armature supérieure (14) de dossier par rapport à l'embase (12).

13. Véhicule automobile, **caractérisé en ce qu'**il comporte au moins une structure de siège (10) selon l'une quelconque des revendications précédentes, notamment pouvant être utilisé comme siège lors du roulage du véhicule et comme partie d'une banquette lorsque le véhicule est à l'arrêt, **caractérisé en ce que** son embase (12) inférieure est fixée sur une partie du véhicule et **en ce que**, dans sa position angulaire relevée d'utilisation, l'armature supérieure de dossier (14) du siège s'étend verticalement vers le haut en référence à la gravité terrestre.

14. *Véhicule automobile selon la revendication précédente, **caractérisé en ce que** l'embase (12) inférieure de fixation comprend un ensemble de pieds (24, 23) dont chacun est apte à être en appui sur le plancher du véhicule.*

## Patentansprüche

1. Struktur (10) eines Kraftfahrzeugsitzes mit : -
einer unteren Basis (12) zur Befestigung der Struktur an einem Teil eines Kraftfahrzeugs;
- einem oberen Rückenlehnenbeschlag (14) des Sitzes, der in beiden Richtungen in Bezug auf die untere Basis (12) um eine horizontale geometrische Querachse (A) schwenkbar montiert ist zwischen :
* einer hochgeklappten Winkelposition zur Benutzung des Sitzes, in der sich das obere Rückenlehnengestell (14) vertikal nach oben erstreckt;
* und einer heruntergeklappten Winkelposition zum Verstauen des Sitzes, die winkelmäßig gegenüber der hochgeklappten Winkelposition zur Benutzung versetzt ist;
- und Mitteln zur automatischen Verriegelung des oberen Rückenlehnengestells (14) in seiner hochgeklappten Winkelposition zur Benutzung,
wobei die automatischen Verriegelungsmittel umfassen : - mindestens eine vertikale Verriegelungsplatte (50), die in Bezug auf den unteren Sockel (12) feststehend ist und eine radiale Verriegelungskerbe (68) aufweist, die in Bezug auf die Erdanziehungskraft vertikal nach oben offen ist;
- einen horizontalen Querverriegelungsfinger (90), der von der oberen Rückenlehnenarmatur (14) getragen wird, die ihn schwenkbar antreibt zwischen :
* einer ersten Position, die mit der angehobenen Winkelposition zur Benutzung des Sitzes verbunden ist und in der der Verriegelungsfinger (90) winkelmäßig gegenüber dem offenen Ende der Verriegelungskerbe (68) positioniert ist oder in die Verriegelungskerbe (68) eingreift, um den oberen Rückenlehnenbeschlag (14) winkelmäßig in Bezug auf die untere Basis (12) zu fixieren;
* und einer Reihe von anderen Positionen, die winkelmäßig in Bezug auf die erste Winkelposition verschoben sind,
und wobei das obere Rückenlehnengestell (14) gelenkig an der unteren Basis (12) mittels einer Gelenkwelle (100) angebracht ist, die drehbar in Bezug auf die untere Basis (12) angebracht ist und die, wenn sich das obere Rückenlehnengestell (14) in seiner angehobenen Gebrauchswinkelposition befindet, in Bezug auf die untere Basis (12) in beide Richtungen translatorisch beweglich ist, um einnehmen zu können :
** eine obere Position, in der der Verriegelungsfinger (90) winkelmäßig gegenüber dem offenen Ende der Verriegelungskerbe (68) positioniert ist;
** und eine verriegelte untere Position, in der der Verriegelungsfinger (90) in die Verriegelungskerbe (68) eingreift,
**dadurch gekennzeichnet, dass**:
- mindestens eine Verriegelungsplatte (50) einen zusätzlichen horizontalen, quer verlaufenden Verriegelungsfinger (70) trägt;
- das obere Rückenlehnengestell (14) eine zusätzliche radiale Verriegelungskerbe (88) aufweist, die unter Bezugnahme auf die Erdanziehungskraft vertikal nach unten offen ist, die durch das obere Rückenlehnengestell (14) schwenkbar angetrieben wird zwischen :
* einer ersten Winkelposition, die mit der hochgeklappten Winkelposition bei der Benutzung des Sitzes verbunden ist und in der das offene Ende der zusätzlichen Verriegelungskerbe (88) winkelmäßig gegenüber dem zusätzlichen Verriegelungsfinger (70) positioniert ist oder in der der zusätzliche Verriegelungsfinger (70) in die zusätzliche Verriegelungskerbe (88) eingreift;
* und einer Reihe von anderen Positionen, die winkelmäßig gegenüber der ersten Winkelposition
versetzt sind.

2. Sitzstruktur (10) nach Anspruch 1, **dadurch gekennzeichnet, dass** die Gelenkwelle (100) in der Nähe jedes ihrer beiden gegenüberliegenden Querenden translatorisch in einem radialen Führungslumen (60) geführt ist, dass zu dem unteren Fußteil (12) gehört, und dass die radiale Ausrichtung jedes Lumens (60) parallel zu der radialen Ausrichtung der Verriegelungskerbe (68) ist.

3. Sitzstruktur (10) nach Anspruch 2, **dadurch gekennzeichnet, dass** jedes Führungslumen (60) in einer Führungsplatte (50) ausgebildet ist, die in Bezug auf die untere Basis (12) feststehend ist.

4. Sitzstruktur (10) nach Anspruch 3, **dadurch gekennzeichnet, dass** sie in Bezug auf eine vertikale Mittelebene (PVLM) symmetrisch gestaltet ist und dass jede der beiden symmetrischen Verriegelungsplatten (50) ein Führungslumen (60) aufweist, um jeweils eine Führungsplatte (50) zu bilden.

5. Sitzstruktur (10) nach Anspruch 4, **dadurch gekennzeichnet, dass** der obere Rückenlehnenrahmen (14) zwei symmetrische vertikale Verriegelungsflügel (52) aufweist, von denen jeder an eine zugehörige Verriegelungsplatte (50) angrenzt und den genannten einen horizontalen Querverriegelungsfinger (70) trägt.

6. Sitzstruktur (10) nach Anspruch 5, **dadurch gekennzeichnet, dass** jeder Verriegelungsflügel (52) eine sogenannte zusätzliche Verriegelungskerbe (88) aufweist.

7. Sitzstruktur (10) nach einem der Ansprüche 4 bis 6, **dadurch gekennzeichnet, dass** mindestens eine Verriegelungsplatte (50) einen Winkelanschlag (66) aufweist, der mit einem sogenannten Querverriegelungsfinger (70) zusammenwirken kann, um eine horizontale, umgeklappte Winkelposition zum Verstauen des oberen Rückenlehnenrahmens (14) zu bestimmen.

8. Sitzstruktur (10) nach einem der Ansprüche 4 bis 7, **dadurch gekennzeichnet, dass** mindestens eine Verriegelungsplatte (50) einen Winkelanschlag (69) aufweist, der mit einem sogenannten Verriegelungsquerfinger (70) zusammenwirken kann, um eine angehobene Winkelposition für die Verwendung des oberen Rückenlehnenrahmens (14) zu bestimmen.

9. Sitzstruktur (10) nach einem der vorhergehenden Ansprüche, **dadurch gekennzeichnet, dass** sie mindestens einen gesteuerten Querstift (110, 111) zur Sicherheitsblockierung des oberen Rückenlehnenbeschlags (14) in seiner angehobenen Winkelstellung für die Benutzung des Sitzes und seiner verriegelten unteren Stellung aufweist, und dass der Sicherheitsblockierstift (110, 111) von dem oberen Rückenlehnenbeschlag (14) getragen wird und axial beweglich zwischen einer eingeklappten Position und einer aktiven Position montiert ist, in die er elastisch zurückgestellt wird und in der er axial in einer Öffnung (114) aufgenommen wird, die gegenüber dem Sockel (12) angeordnet ist.

10. Sitzstruktur (10) nach Anspruch 9, **dadurch gekennzeichnet, dass** sie einen Griff (126) umfasst, der mit dem oberen Rückenlehnenrahmen (14) verbunden ist und es ermöglicht:
- auf den Sicherheitsblockierbolzen (110, 111) eine Kraft zur Steuerung seiner Verschiebung aus seiner aktiven Position in seine eingezogene Position auszuüben;
- und gleichzeitig auf das obere Rückenlehnengestell (14) eine Kraft (F) zur Entriegelung auszuüben, aus seiner unteren, verriegelten Position in seine obere Position.

11. Struktur (10) nach Anspruch 10, **dadurch gekennzeichnet, dass** der obere Teil des Griffs (126) eine Aufnahme (128) aufweist, die es einem Benutzer ermöglicht, eine Zugkraft (F) von unten nach oben auf den Griff auszuüben. Durch eine einzige Aktion kann der Benutzer gleichzeitig auf den Sicherheitsblockierstift (110) eine Kraft zur Steuerung seiner Bewegung aus seiner aktiven Position in seine eingezogene Position ausüben und gleichzeitig auf die obere Rückenlehnenarmatur (14) eine Entriegelungskraft ausüben, die es ihm ermöglicht, sie in Bezug auf die Erdanziehungskraft vertikal aus ihrer unteren, verriegelten Position in ihre obere Entriegelungsposition zu bewegen.

12. Sitzstruktur (10) nach einem der vorhergehenden Ansprüche, **dadurch gekennzeichnet, dass** sie Mittel (130) zur visuellen Markierung der angehobenen Winkelposition bei der Verwendung des oberen Rückenlehnenrahmens (14) in Bezug auf den Sockel (12) umfasst.

13. Kraftfahrzeug, **dadurch gekennzeichnet, dass** es mindestens eine Sitzstruktur (10) nach einem der vorhergehenden Ansprüche aufweist, die insbesondere beim Fahren des Fahrzeugs als Sitz und beim Stehen des Fahrzeugs als Teil einer Sitzbank verwendet werden kann, **dadurch gekennzeichnet, dass** ihre untere Basis (12) an einem Teil des Fahrzeugs befestigt ist und dass sich in ihrer angehobenen Winkelposition bei der Verwendung das obere Rückenlehnengestell (14) des Sitzes in Bezug auf die Erdanziehungskraft vertikal nach oben erstreckt.

14. Kraftfahrzeug nach dem vorhergehenden Anspruch, **dadurch gekennzeichnet, dass** die untere Befestigungsbasis (12) eine Gruppe von Füßen (24, 23) umfasst, von denen jeder geeignet ist, sich auf dem Boden des Fahrzeugs abzustützen.

## Claims

1. Motor vehicle seat structure (10) comprising : -
a lower base (12) for fixing the structure to a part of a motor vehicle;
- an upper backrest frame (14) of the seat which is mounted so as to pivot in both directions with respect to the lower base (12), about a horizontal transverse geometric axis (A) between : * a raised angular position of use of the seat in which the upper backrest frame (14) extends vertically upwards;
* and a folded-down angular storage position of the seat which is angularly offset relative to the raised angular position of use;
- and means for automatically locking the upper backrest frame (14) in its raised angular position of use,
in which the automatic locking means comprise :
- at least one vertical locking plate (50) which is fixed relative to the lower baseplate (12) and which has a radial locking notch (68) which is open vertically upwards, with reference to the earth's gravity ;
- a horizontal transverse locking finger (90) which is carried by the upper backrest frame (14) which pivots it between : * a first position associated with the raised angular position of use of the seat and in which the locking finger (90) is positioned angularly opposite the open end of the locking notch (68) or is engaged in the locking notch (68) to immobilise the upper backrest frame (14) angularly with respect to the lower base (12);
* and a series of other positions, angularly offset with respect to said first angular position,
and in which the upper backrest frame (14) is mounted in an articulated manner on the lower base (12) by means of an articulation shaft (100) which is mounted so as to rotate with respect to the lower base (12) and which, when the upper backrest frame (14) is in its raised angular position of use, can move in translation in both directions with respect to the lower base (12) so as to be able to occupy : ** a raised position in which the locking finger (90) is positioned angularly opposite the open end of the locking notch (68);
** and a locked lower position in which the locking finger (90) is engaged in the locking notch (68),
**characterised in that**:
- at least one locking plate (50) carries an additional horizontal transverse locking finger (70) ;
- the upper backrest frame (14) has an additional radial locking notch (88) which is open vertically downwards, with reference to the earth's gravity, which is pivoted by the upper backrest frame (14) between :
* a first angular position associated with the raised angular position of use of the seat and in which the open end of the additional locking notch (88) is positioned angularly opposite the additional locking finger (70) or in which the additional locking finger (70) is engaged in the additional locking notch (88);
* and a series of other positions, angularly offset with respect to said first angular position.

2. Seat structure (10) according to Claim 1, **characterised in that**, in the vicinity of each of its two opposite transverse ends, the articulation shaft (100) is guided in translation in a radial guide slot (60) belonging to the lower base (12), and **in that** the radial orientation of each slot (60) is parallel to the radial orientation of the locking notch (68).

3. Seat structure (10) according to claim 2, **characterised in that** each guide aperture (60) is formed in a guide plate (50) which is fixed with respect to the lower base (12).

4. Seat structure (10) according to claim 3, **characterised in that** it has a symmetrical design with respect to a median vertical plane (PVLM), and **in that** each of the two symmetrical locking plates (50) has a guide slot (60) to form each a guide plate (50).

5. Seat structure (10) according to claim 4, **characterised in that** the upper backrest frame (14) comprises two symmetrical vertical locking wings (52), each of which is adjacent to an associated locking plate (50) and carries said one horizontal transverse locking finger (70).

6. Seat structure (10) according to claim 5, **characterised in that** each locking wing (52) comprises a so-called additional locking notch (88).

7. Seat structure (10) according to any one of claims 4 to 6, **characterised in that** at least one locking plate (50) comprises an angular stop (66) which is able to cooperate with a said transverse locking finger (70) to determine a folded horizontal angular storage position of the upper backrest frame (14).

8. Seat structure (10) according to any one of claims 4 to 7, **characterised in that** at least one locking plate (50) comprises an angular stop (69) which is able to cooperate with a transverse locking finger (70) to determine a raised angular position of use of the upper backrest frame (14).

9. Seat structure (10) according to any one of the preceding claims, **characterised in that** it comprises at least one controlled transverse pin (110, 111) for locking the upper backrest frame (14) in its raised angular position of use of the seat and locked in its lowered position, and **in that** the said safety locking pin (110, 111) is carried by the upper backrest frame (14) and is mounted so that it can move axially between a retracted position and an active position towards which it is returned elastically and in which it is received axially in an orifice (114) arranged opposite the base (12).

10. Seat structure (10) according to Claim 9, **characterized in that** it comprises a handle (126) associated with the upper backrest frame (14) making it possible : -
to apply to the said safety locking pin (110, 111) a force to control its displacement from its active position to its retracted position;
- and to simultaneously apply to the upper backrest frame (14) an unlocking force (F), from its locked lower position to its upper position.

11. Structure (10) according to claim 10, **characterized in that** the upper part of the said handle (126) comprises a housing (128) allowing a user to apply to it a pulling force (F), from the bottom upwards, and, by a single action, to simultaneously apply to the said safety locking pin (110) a force to control its displacement from its active position to its retracted position, and to simultaneously apply to the upper backrest frame (14) an unlocking force, enabling it to be displaced vertically, with reference to the earth's gravity, from its lower locked position to its upper unlocked position.

12. Seat structure (10) according to any one of the preceding claims, **characterised in that** it comprises means (130) for visually identifying the raised angular position of use of the upper backrest frame (14) relative to the base (12).

13. Motor vehicle, **characterised in that** it comprises at least one seat structure (10) according to any one of the preceding claims, in particular capable of being used as a seat when the vehicle is moving and as part of a bench seat when the vehicle is stationary, **characterised in that** its lower base (12) is fixed to a part of the vehicle and **in that**, in its raised angular position of use, the upper backrest frame (14) of the seat extends vertically upwards with reference to the earth's gravity.

14. Motor vehicle according to the preceding claim, **characterised in that** the lower fixing base (12) comprises a set of feet (24, 23), each of which is able to rest on the floor of the vehicle.
